# EUROPÄISCHE PATENTSCHRIFT

(11) **EP 1 531 688 B1**
(45) Veröffentlichungstag und Bekanntmachung des Hinweises auf die Patenterteilung: **15.08.2007**
(21) Anmeldenummer: 03783981.8
(22) Anmeldetag: 16.06.2003
(51) Int. Cl.: A23L 1/29, A23L 1/305, C12N 9/50, A23L 1/09, A23L 1/304, A23L 1/30

(54) **DIÄTETISCHES MITTEL**
DIET PRODUCT
PRODUIT ALIMENTAIRE DIETETIQUE

(30) Priorität: 25.07.2002 DE 10233809
(43) Veröffentlichungstag der Anmeldung: 25.05.2005
(73) Patentinhaber: Krüger, Sabine, 29553 Bienenbüttel (DE)
(72) Erfinder: Krüger, Sabine, 29553 Bienenbüttel (DE)
(74) Vertreter: Hansen, Jochen
(86) Internationale Anmeldenummer: PCT/EP2003/006346
(87) Internationale Veröffentlichungsnummer: WO 2004/014153

(56) Entgegenhaltungen:
- EP-A- 0 244 152
- EP-A- 0 797 927
- WO-A-02/32231
- US-A- 3 857 970

## Beschreibung

Die Erfindung betrifft diätetische Mittel auf Basis von Proteinen, Kohlehydraten und ggf. Fett.

Diätetische Mittel auf Basis von Proteinen und Kohlehydraten sowie ggf. Fett sind in unterschiedlichen Zusammensetzungen und auch in instantinisierter Form als solche bekannt. In derartigen diätetischen Mitteln, die als Ersatznahrung für verschiedene Zwecke eingesetzt werden, und zwar von der Rekonvaleszenz bis hin zu Reduktionsdiäten, liegen die Proteine in der Regel in nativer Form vor oder zum Teil als Proteinhydrolysate. Hydrolysate oder teilhydrolysierte Proteine werden meist aus Ausgangsstoffen hergestellt, die verhältnismäßig preisgünstige Proteinquellen darstellen wie beispielsweise Sojamehl. Die Herstellung von Hydrolysaten aus Sojaproteinen und deren Weiterverarbeitung zu fleischähnlichen Produkten und als Zusatz zu Getränken wird beispielsweise in der EP 0 797 927 beschrieben. Sojaprotein ist ein hochwertiges Protein, dasselbe gilt auch für Milch- und Molkenproteine, die ebenfalls häufiger als Eiweißquelle eingesetzt werden.

Die mit der Nahrung aufgenommenen Proteine werden im Körper durch das Zusammen- und Nebeneinanderwirken verschiedener Proteasen und Peptidasen bis zu den Aminosäuren aufgespalten. Die proteolytischen Enzyme des Magens und des Pankreas werden in Form inaktiver Vorstufen gebildet und nach Sekretion in die aktive Form umgewandelt. Die Peptidasen der Mukosazellen des Dünndarmes werden jedoch nur zum geringen Teil in das Darmlumen sezerniert. Vielmehr vollzieht sich der Abbau der Oligo- und Dipeptide erst nach ihrer Resorption in den Mukosazellen selbst.

Bei Einsatz nativer Proteine oder von Proteinhydrolysaten mit hohem Molekulargewicht muß daher noch im Körper ein weiterer Abbau erfolgen, so daß die Aminosäuren erst mit Verzögerung dem weiteren Stoffwechsel als Energieträger zur Verfügung stehen.

Der Erfindung liegt daher die Aufgabe zugrunde, ein diätetisches Mittel zu entwickeln, das die Zurverfügungstellung von Proteinen als Energieträger im Körper erleichtert.

Zur Lösung der Aufgabe wird daher ein diätetisches Mittel auf Basis von Proteinen, Kohlehydraten und ggf. Fett vorgeschlagen, das gekennzeichnet ist durch einen Zusatz von Proteasen.

Proteasen sind Enzyme, die Peptidbindungen spalten, wobei man zwischen Exopeptidasen und Endopeptidasen unterscheidet. Exopeptidasen spalten von Amino- oder Carboxyende einzelne Aminosäuren ab, während Endopeptidasen die Amidbindungen im Inneren eines Polypeptids spalten. Zu den Endopeptidasen gehören die meisten pflanzlichen Proteasen, von denen am häufigsten Papain aus Carica papaya, Ficin aus Ficus carica und Bromelain aus Ananassa comosus eingesetzt werden.

Das erfindungsgemäße Mittel besteht aus einer Proteinbasis, und zwar vorzugsweise entöltem Sojamehl oder Milch- oder Molkenproteine, die auch in Form von Isolaten, Proteinschnitten oder Rekombinationen vorliegen können. Selbstverständlich sind auch andere Proteinquellen einsetzbar, die aber evtl. je nach ihrer vorhandenen oder nicht vorhandenen Vollwertigkeit komplettiert werden müssen; Soja und Milch bzw. Molke werden wegen ihrer relativen Hochwertigkeit und ihres im Vergleich dazu günstigen Preises bevorzugt. Weiterhin enthält das diätetische Mittel einen Anteil an schnell verwertbaren Kohlehydraten, wobei im Prinzip alle für die Ernährung üblichen Zucker und Zuckeralkohole eingesetzt werden können. Bevorzugt enthalten die Mittel nur einen Zucker als Kohlehydratquelle, und zwar insbesondere Fructose, die den Vorteil hat, den Blutzuckerspiegel bei Diabetikern oder Prä-Diabetikern nicht oder nur geringfügig zu belasten.

Weiterhin enthalten die erfindungsgemäßen Mittel Vitamin- und Mineralstoffkombinationen, die in etwa den durchschnittlichen täglichen Bedarf eines Erwachsenen decken sollten. Als Vitamine sollten enthalten sein Axerophthol, Cholecalciferol oder Ergocalciferol oder deren Derivate, α-Tocopherol, Ascorbinsäure, Thiamin, Riboflavin, Niacin, Pyridoxin, Pyridoxal bzw. Pyridoxamin, Cobalamin, Folsäure, Biotin und Pantothensäure.

Zur Komplettierung des Mineralstoffbedarfs sind enthalten Kalium in der Form von Dikaliumphosphat, Calcium in der Form von Tricalciumphosphat, Magnesium in der Form von Magnesiumhydroxyd, Eisen als Eisen (III) diphosphat, Zink als Zinkoxyd, Mangan als Mangan (II) sulfat, Kupfer als Kupfercarbonat, Jod als Natriumjodid und Selen als Natriumselenit.

Je nach Anwendungszweck der diätetischen Mittel können diese zusätzlich auch Fett, vorzugsweise pflanzliche Fette mit einem hohen Gehalt an ungesättigten und vorzugsweise essentiellen Fettsäuren enthalten. Geeignete Fette sind beispielsweise Soja-, Raps-, Sonnenblumen-, Maiskeim-, Weizenkeim- und Leinöl.

Die erfindungsgemäßen Mittel enthalten vorzugsweise über 50 Gew.-% Proteine, meist zwischen 50 bis 60 Gew.-%, etwa 30 Gew.-% Kohlehydrate, meist zwischen etwa 25 bis 38 Gew.-% und ggf. zwischen etwa 5 bis 10 Gew.-% Fette sowie Vitamine und Mineralstoffanteile.

Die diätetischen Mittel werden vorzugsweise als Instantprodukte angeboten, die in Portionspackungen von etwa 30 bis 40 g Pulver abgefüllt sind und beispielsweise in 250 ml Wasser oder fettarmer Milch (1,5% Fett) aufgelöst werden können. Die Herstellung von Instantgetränkepulvern ist dem Fachmann geläufig und erfolgt nach Standardprozeduren.

Die erfindungsgemäßen Mittel können einerseits eingesetzt werden als Mahlzeiten bei der gewichtskontrollierenden Ernährung, wobei dann in der Regel auf den Fettzusatz verzichtet wird. Ein anderes Einsatzgebiet, bei dem der Fettzusatz erwünscht ist, ist die Ernährung in der Rekonvaleszenz oder bei Untergewicht und ein weiterer Bereich, bei dem die Mischungen einen Zusatz an Fett erhalten können, sind als Sportlernahrung, auch als sogenannte Energie-Drinks, die schnell Energie zurückbringen sollen, aber auch als Reiseproviant beispielsweise bei Wanderungen, Trekking usw.

Der große Vorteil der erfindungsgemäßen Diätetika liegt in der schnellen Bereitstellung von Oligopeptiden bis zu Dipeptiden und Aminosäuren, die jeweils eine deutlich schnellere Resorption als Proteine erlauben. Untersuchungen haben gezeigt, daß bei Zusatz von Papain, Ficin oder Bromelain der "Vorverdau" von Proteinen sehr schnell einsetzt und Proteingemische mit Molekulargewichten zwischen 6000 und 14000 bereits nach Minuten nachweisbar sind. Noch deutlich wird der schnelle Abbau durch das Proteasengemisch oder durch die einzelnen Proteasen durch den Nachweis von Oligopeptiden mit einem Molekulargewicht von 2000, die häufig bereits in der O-Probe bestimmt werden konnten.

Die Erfindung wird im folgenden anhand der Beispiele näher erläutert:

### Beispiel 1

Herstellung eines instantanisierten Diätetikums

| | |
|---|---|
| Sojaproteinisolat | 51% (Gew.-%) |
| Fructose | 30% |
| pflanzliches Fettpulver | 8,3% |
| Aromastoffe | 2% |
| Dicaliumphosphat | 2% |
| Verdickungsmittel (Guarkernmehl) | 0,8% |
| Trikalciumphosphat | 0,87% |
| Magnesiumhydroxyd | 0,23% |

werden vermischt mit 100 mg Eisen (lll) Diphosphat, 28 mg Vitamin C, 18 mg Zinkoxyd, 17 mg Niacin, 9,7 mg α-Tocopherol, 4 mg Mangan (II) Sulfat, 3 mg Kupfercarbonat, 1,3 mg Pyridoxin, 1 mg Thiamin, 592 µg Axerophthol, 200 µg Reboflavin, 230 µg Natriumjodid, 190 µg Natriumselenit, 158 µg Folsäure, 110 µg Pantothensäure, 50 µg Biotin und 4,8 µg Cholecalcoferol je 100 g Mischung. Dieser Mischung werden ferner - falls eine stärkere Süße gewünscht wird - Natrium-cyclamat und Saccharin-Natrium in üblicher Dosierung zugegeben; ansonsten wird ad 100 mit Fructose aufgefüllt.

Erfindungsgemäß werden der Mischung vor dem Auffüllen je 0,5% Papain, Ficin und Bromelain zugesetzt.

Diese Mischung wird der Zerstäubungstrocknung unterzogen und dann in üblicher Weise instantisiert.

### Beispiel 2

### Nachweis des proteolytischen Abbaus

3 g des diätetischen Mittels nach Beispiel 1 (ohne Proteasenzusatz) wurde zuerst mit der Protease oder dem Proteasengemisch (15 mg für 0,5 Gew.-% oder 90 mg für 3 Gew.-%) in einem 50 ml Flakon gemischt und danach mit 25 ml auf 20°C temperierte Flüssigkeit (Wasser oder fettarme Milch) verrührt und sofort eine Probe für die gelelektrophoretische Analyse entnommen (0-Probe). Der Blindwert stellt hingegen eine Probe ohne Proteasezusatz dar. Der proteolytische Abbau wurde mit Hilfe der Thermostatierung bei 20°C durchgeführt. Nach verschiedenen Inkubationszeiten, die in den Legendungen zu den Abbildungen jeweils dokumentiert sind, wurden Aliquote zur elektrophoretischen Analyse entnommen. Zum Abstoppen der proteolytischen Reaktion wurden diese Proben in flüssigem Stickstoff schockgefroren.

Es wurde untersucht, wie die Proteasen Papain, Ficin und Bromelain auf das Substrat einwirken, wobei eine Versuchsreihe mit einer Mischung aus allen drei Proteasen zu jeweils 0,5 Gew.-% durchgeführt wurde.

Die vorbereiteten Proben wurden dann einer SDS-PAGE (Natriumdodecylsufat-Polyacrylamidgelektrophorese) unterzogen. Die für deutlich sichtbare Banden erforderliche Proteinmenge beträgt etwa 3 µg. Die Proteinlösung wurde in SDS-haltigem Probenpuffer (50 mM Tris-HCl, pH 6,8, 10% (v/v) Glycerin, 4% SDS (w/v), 5% Mercaptoethanol, 0,005% Bromphenolblau (w/v) zu einem Gesamtvolumen von etwa 15 µl gelöst und 15 Minuten auf 95°C erhitzt. Dadurch werden die Proteine vollständig denaturiert und durch die Anwesenheit von Mercaptoethanol reduziert. Danach wurden die Proben bis zur Auftragung in Eis gestellt. Nach dem Auftragen der Proben in die Taschen des Sammelgels wurde die Gelelektrophorese bei einer Stromstärke von 30 mA und einer Spannung von 120 V gefahren. Der Elektrodenpuffer besteht aus 50 mM Tris-HCl, 384 mM Glycin, 0,1% SDS, pH 8,3. Die zur Dokumentation verwendeten homogenen Gele haben eine Konzentration von 15% Acrylamid um besonders die interessierenden Abbauprodukte mit kleinem Molekulargewicht visualisieren zu können. Die Färbung der Proteinbanden erfolgte mit Coomassie Brilliant Blau (Coomassie-Färbung; 0,25% Coomassie Brilliant Blau, 30% Methanol, 6% Essigsäure). Danach wurden die Gele mit Entfärbelösung (30% Methanol, 10% Essigsäure) und Trocknungslösung (2-3% Glycerin, 40-50% Methanol) behandelt und zum Trocknen an der Luft auf einen Rahmen gespannt. Die verwendeten Proteinmarker wurden als Gemisch von Life Technologies (Protein Molecular Weight Standards, Low Range) bezogen und enthalten als Markerproteine Insulin (α und β Ketten, Molekulargewicht 3000 Da), Trypsinihibitor vom Rind (Molekulargewicht 6200 Da), Lysozym (Molekulargewicht 14300 Da), β-Lactoglobulin (Molekulargewicht 18400 Da), Carboanhydrase (Molekulargewicht 29000 Da) und Ovalbumin (Molekulargewicht 43000 Da).

Es konnte durch Natriumdodecylsulfonat-Polyacrylamidgeleketrophorese (SDS-PAGE) gezeigt werden, daß alle drei eingesetzten Proteasen (Papain, Ficin und Bromelain) sowohl allein, als auch als Proteasengemisch - wie Mischung nach Beispiel 1 - unter den gegebenen Reaktionsbedingungen Proteine abbauen können. Dieser Abbau konnte durch Variation der Proteasekonzentration bezogen auf die Masse an Getränk in seiner Kinetik dokumentiert werden (siehe Abbildungen der Gele). Der Hauptbestandteil des Getränkes ist Sojabohnenmehl, ein Gemisch aus pflanzlichen Proteinen unterschiedlichen Molekulargewichtes. Durch die enzymatische Wirkung der Proteasen in den eingesetzten Konzentrationsverhältnissen von 0,5% (w/w) bzw. 3% (w/w) werden die Proteine prozessiert, wobei die Hauptfraktionen Molekulargewichte zwischen 6000 Da und 14000 Da zeigen. Das Bandenmuster zeigt sich schon nach 10 Minuten Inkubationszeit bei 0,5% (w/w) oder nach 5 Minuten bei 3% (w/w) Proteasekonzentration. Es konnten keine wesentlichen Unterschiede in der Molekulargewichtsverteilung bei der Verwendung von Wasser oder fettarmer Milch als Lösungsmittel für das Instantpulver bestimmt werden, so daß beide Vermittler als gleichwertig einzustufen und zu empfehlen sind. Der Abbau mit Papain und Ficin verläuft vollständiger, was bei diesen Enzymen auch in einem größeren Anteil an Peptiden mit Molekulargewichten unter 14000 Da in den Gelen erkennbar ist.

Die Kinetik des Abbaus mit den Proteasen Papain und Ficin zeigt, daß schon nach kurzer Inkubationszeit Peptide mit Molekulargewichten um 2000 Da nachweisbar sind, die ernährungsphysiologisch bedeutsam sein könnten. Bromelain ist katalytisch nicht so effizient wie die beiden anderen Proteasen, der Abbau bei einer Konzentration von 0,5% (w/w) Enzym zeigt erst nach längerer Inkubationszeit das Auftreten von Peptiden kleineren Molekulargewichtes. Der effektivste proteolytische Abbau wird durch den kombinierten Einsatz aller drei Proteasen [je 0,5% (w/w), insgesamt 1,5% (w/w)] erreicht, im Massenspektrum sind schon in der 0-Probe Peptide mit Molekulargewichten um 2000 Da nachweisbar.

### Abbildungen:

SDS-PAGE des Abbaus vom Gemisch Beispiel 1 (Rezeptur ohne Proteasen) mit Papain [3% (w/w)]. 3 g Rezeptur wurden in 24 ml fettarmer Milch (0,5% Fett) suspendiert. 90 mg Papain wurden in 1 ml fettarmer Milch (0,5% Fett) gelöst und zur Suspension zugefügt. Der proteolytische Abbau wurde auf 20°C thermostatiert. *Lane 1* Marker, *lane 2* fettarme Milch (0,5% Fett), *lane 3* Blindwert (keine Protease), *lane 4* 0-Probe, *lane 5* 10 Minuten Inkubationszeit, *lane 6* 20 Minuten Inkubationszeit, *lane 7* 30 Minuten Inkubationszeit, *lane 8* 60 Minuten Inkubationszeit, *lane 9* 90 Minuten Inkubationszeit, *lane 10* 120 Minuten Inkubationszeit. Gel 15% Acrylamid, denaturierend und reduzierend.

SDS-PAGE des Abbaus vom Gemisch 1 (Rezeptur ohne Proteasen) mit Ficin [3% (w/w)]. 3 g Rezeptur mit Aromastoff [Endkonzentration 2% (w/w)] wurden mit 24 ml fettarmer Milch (0,5% Fett) suspendiert. 90 mg Ficin wurden in 1 ml fettarmer Milch (0,5% Fett) gelöst und zur Suspension zugefügt. Der proteolytische Abbau wurde auf 20°C thermostatiert. *Lane 1* Marker, *lane 2* fettarme Milch (0,5% Fett), *lane 3* Ficin, *lane 4* Blindwert (keine Protease), *lane 5* 0-Probe, *lane 6* 10 Minuten Inkubationszeit, *lane 7* 20 Minuten Inkubationszeit, *lane 8* 30 Minuten Inkubationszeit, *lane 9* 60 Minuten Inkubationszeit, *lane 10* 90 Minuten Inkubationszeit, *lane 11* 120 Minuten Inkubationszeit. Gel 15% Acrylamid, denaturierend und reduzierend.

SDS-PAGE des Abbaus von Gemisch 1 (Rezeptur ohne Proteasen) mit Papain [3% (w/w)]. 3 g Rezeptur wurden in 24 ml Wasser suspendiert. 90 mg Papain wurden in 1 ml Wasser gelöst und zur Suspension zugefügt. Der proteolytische Abbau wurde auf 20°C thermostatiert. *Lane 1* Marker, *lane 2* Blindwert (keine Protease), *lane 3* 0-Probe, *lane 4* 10 Minuten Inkubationszeit, *lane* 5 20 Minuten Inkubationszeit, *lane 6* 30 Minuten Inkubationszeit, *lane 7* 60 Minuten Inkubationszeit, *lane 8* 90 Minuten Inkubationszeit, *lane 9* 120 Minuten Inkubationszeit. Gel 15% Acrylamid, denaturierend und reduzierend.

SDS-PAGE des Abbaus von Gemisch 1 (Rezeptur ohne Proteasen) mit Ficin [3% (w/w)]. 3 g Rezeptur wurden in 24 ml Wasser suspendiert. 90 mg Ficin wurden in 1 ml Wasser gelöst und zur Suspension zugefügt. Der proteolytische Abbau wurde auf 20°C thermostatiert. *Lane 1* Marker, *lane 2* Blindwert (keine Protease), *lane 3* 0-Probe, *lane 4* 10 Minuten Inkubationszeit, *lane 5* 20 Minuten Inkubationszeit, *lane 6* 30 Minuten Inkubationszeit, *lane 7* 60 Minuten Inkubationszeit, *lane 8* 90 Minuten Inkubationszeit, *lane 9* 120 Minuten Inkubationszeit. Gel 15% Acrylamid, denaturierend und reduzierend.

SDS-PAGE des Abbaus von Gemisch 1 (Rezeptur ohne Proteasen) mit Bromelain [3% (w/w)]. 3 g Rezeptur und 90 mg Bromelain wurden zuerst gemischt und danach erst in 25 ml Wasser suspendiert. Der proteolytische Abbau wurde auf 20°C thermostatiert. *Lane 1* Marker, *lane 2* 0-Probe, *lane 3K* 5 Minuten Inkubationszeit, *lane 4* 10 Minuten Inkubationszeit, *lane 5* 20 Minuten Inkubationszeit, *lane 6* 30 Minuten Inkubationszeit, *lane 7* 60 Minuten Inkubationszeit, *lane 8* 90 Minuten Inkubationszeit, *lane 9* 120 Minuten Inkubationszeit, *lane 10* Marker. Gel 15% Acrylamid, denaturierend und reduzierend.

SDS-PAGE des Abbaus von Gemisch 1 (Rezeptur ohne Proteasen) mit Bromelain [Vergleich 0,5% (w/w) und 3% (w/w)]. 3 g Rezeptur und 15 mg bzw. 90 mg Bromelain wurden zuerst gemischt und danach erst in 25 ml Wasser suspendiert. Der proteolytische Abbau wurde auf 20°C thermostatiert. *Lane 1* GDH/Marker (Molekulargewicht 55600 Da), *lane 2* Marker, *lane 3* Blindwert, *lane 4* 0-Probe [0,5% (w/w) Bromelain], *lane 5* 10 Minuten Inkubationszeit [0,5% (w/w) Bromelain], *lane 6* 20 Minuten Inkubationszeit [0,5% (w/w) Bromelain], *lane 7* 0-Probe [3% (w/w) Bromelain], *lane 8* 5 Minuten Inkubationszeit [3% (w/w) Bromealin], *lane 9* 10 Minuten Inkubationszeit [3% (w/w) Bromelain], *lane 10* 20 Minuten Inkubationszeit [3% (w/w) Bromelain], *lane 11* Marker. Gel 15% Acrylamid, denaturierend und reduzierend.

SDS-PAGE des Abbaus von Gemisch 1 (Rezeptur ohne Proteasen) mit Bromealin [0,5% (w/w)], Vergleich des Abbaus in (A) Wasser und (B) fettarmer Milch (0,5% Fett). 3 g Rezeptur und 15 mg Bromelain wurden zuerst gemischt und danach erst in 25 ml Wasser bzw. fettarmer Milch (0,5% Fett) suspendiert. Der proteolytische Abbau wurde auf 20°C thermostatiert. Gilt für (A) und (B): *Lane 1* GDH-Marker (Molekulargewicht 55600 Da), *lane 2* Marker, *lane 3* 0-Probe, *lane 4* 10 Minuten Inkubationszeit, *lane 5* 20 Minuten Inkubationszeit, *lane 6* 30 Minuten Inkubationszeit, *lane 7* 60 Minuten Inkubationszeit, *lane 8* 90 Minuten Inkubationszeit, *lane 9* 120 Minuten Inkubationszeit. Gel 15% Acrylamid, denaturierend und reduzierend

SDS-PAGE des Abbaus von Gemisch 1 (Rezeptur ohne Proteasen) mit Bromealin, Ficin und Papain [je 0,5% (w/w)], Vergleich des kombinierten Abbaus in Wasser. 3 g Rezeptur und je 15 mg Protease wurden zuerst gemischt und danach erst in 25 ml Wasser suspendiert. Der proteolytische Abbau wurde auf 20°C thermostatiert. *Lane 1* GDH-Marker (Molekulargewicht 55600 Da), *lane 2* Marker, *lane 3* 0-Probe, *lane 4* 10 Minuten Inkubationszeit, *lane 7* 60 Minuten Inkubationszeit, *lane 8* 90 Minuten Inkubationszeit, *lane 9* 120 Minuten Inkubationszeit, *lane 10* Marker. Gel 15% Acrylamid, denaturierend und reduzierend.

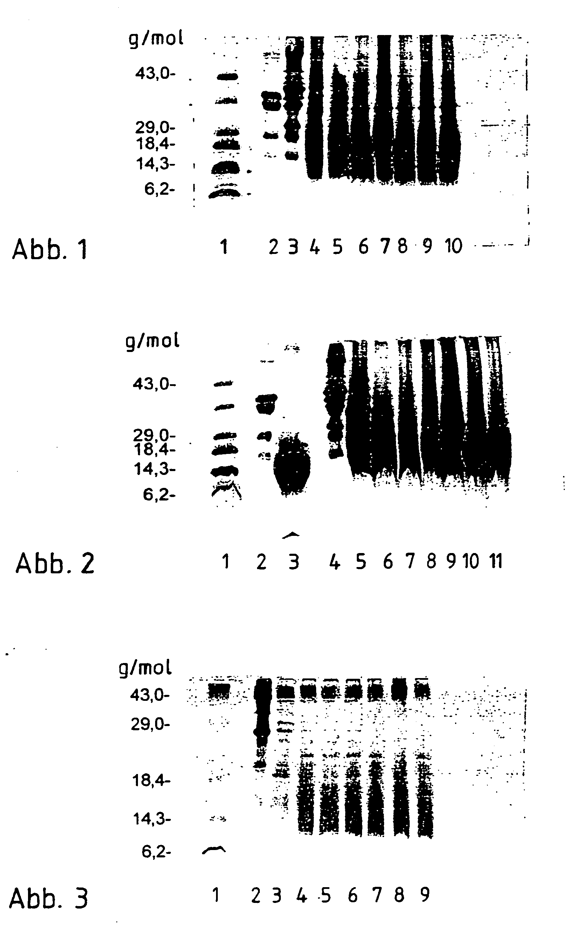

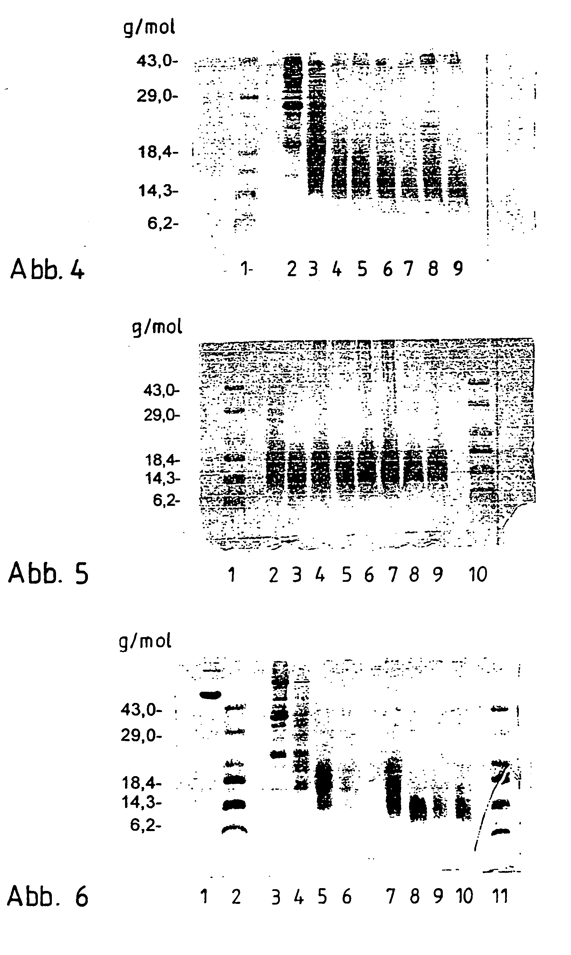

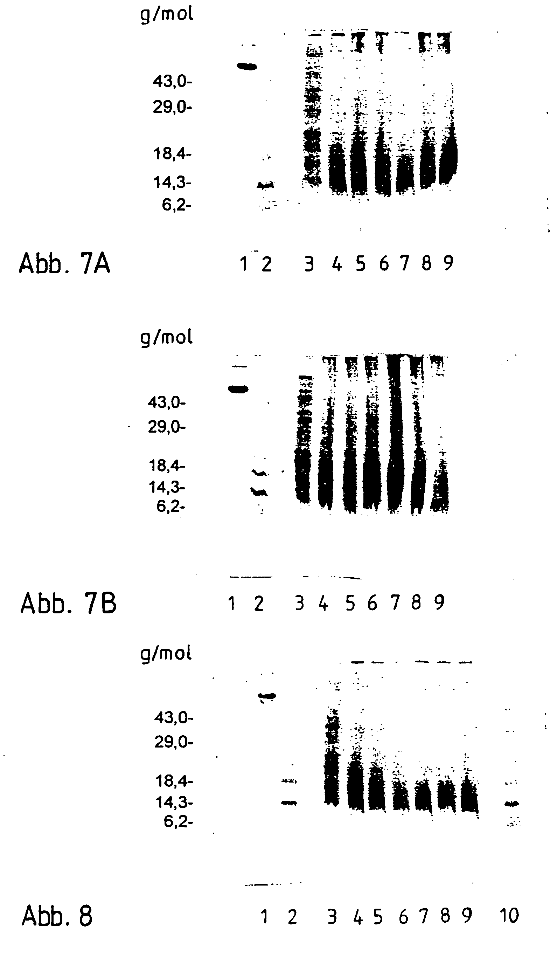

## Patentansprüche

1. Diätetisches Mittel bestehend aus Proteinen, Kohlenhydraten und Fett, das einen Zusatz von Proteasen enthält, **dadurch gekennzeichnet, dass** es in instantisierter Form vorliegt und 30 bis 40 g des Pulvers in 250 ml Wasser oder fettarmer Milch auflösbar sind, womit ein Vorverdau von Proteinen einsetzt.

2. Diätetisches Mittel nach Anspruch 1, **dadurch gekennzeichnet, dass** es pflanzliche Proteasen enthält.

3. Diätetisches Mittel nach Anspruch 1 oder 2, **dadurch gekennzeichnet, dass** es Papain, Ficin und/oder Bromelain enthält.

4. Diätetisches Mittel nach Anspruch 1 bis 3, **dadurch gekennzeichnet, dass** es insgesamt etwa 0,1 bis 7, insbesondere 1,5 bis 3 Gew.-% Proteasen enthält.

5. Diätetisches Mittel nach Anspruch 1 bis 4, **dadurch gekennzeichnet, dass** es Soja- und/oder Milchproteine, auch in Form von Isolaten, Schnitten oder Rekombinationen, enthält.

6. Diätetisches Mittel nach Anspruch 1 bis 5, **dadurch gekennzeichnet, dass** es als Kohlehydrat nur eine Zuckerart enthält.

7. Diätetisches Mittel nach Anspruch 1 bis 6, **dadurch gekennzeichnet, dass** es Fructose enthält.

8. **Diätetisches Mittel nach Anspruch 1 bis 7, dadurch gekennzeichnet, dass es** Fett mit einem hohen Anteil an ungesättigten bzw. essentiellen Fettsäuren enthält.

9. Diätetisches Mittel nach Anspruch 1 bis 8, **dadurch gekennzeichnet, dass** es zusätzlich Vitamine und Mineralstoffe enthält.

## Claims

1. A dietary product consisting of proteins, carbohydrates and fat and containing an admixture of proteases, **characterised in that** the product is in instantised form, and 30 to 40 g of the powder can be dissolved in 250 ml of water or low-fat milk, thereby initiating the pre-digestion of proteins.

2. A dietary product according to claim 1, **characterised in that** it contains vegetable proteases.

3. A dietary product according to claim 1 or 2, **characterised in that** it contains papain, ficin and/or bromelain.

4. A dietary product according to claims 1 to 3, **characterised in that** it contains a total of approximately 0.1 to 7, in particular 1.5 to 3, % w/w of proteases.

5. A dietary product according to claims 1 to 4, **characterised in that** it contains soybean proteins and/or milk proteins, also in the form of isolates, portions or recombinant proteins.

6. A dietary product according to claims 1 to 5, **characterised in that** it contains as carbohydrate only one type of sugar.

7. A dietary product according to claims 1 to 6, **characterised in that** it contains fructose.

8. A dietary product according to claims 1 to 7, **characterised in that** it contains fat with a high proportion of unsaturated and essential fatty acids.

9. A dietary product according to claims 1 to 8, **characterised in that** it additionally contains vitamins and mineral substances.

## Revendications

1. Produit diététique composé de protéines, de glucides et de lipides et comprenant un ajout de protéases, **caractérisé en ce qu'**il est disponible sous la forme d'une préparation instantanée et 30 à 40 g de la poudre peuvent être dissous dans 250 ml d'eau ou de lait écrémé ce qui déclenche une prédigestion de protéines.

2. Produit diététique selon la revendication 1, **caractérisé en ce qu'**il contient des protéases végétales.

3. Produit diététique selon la revendication 1 ou 2, **caractérisé en ce qu'**il contient de la papaïne, de la ficine et/ou de la bromélaïne.

4. Produit diététique selon l'une des revendications 1 à 3, **caractérisé en ce qu'**il contient en tout environ 0,1 à 7 % en poids de protéases, notamment 1,5 à 3 % en poids,

5. Produit diététique selon l'une des revendications 1 à 4, **caractérisé en ce qu'**il contient des protéines de soja et/ou de lait, également sous forme d'isolat, de factions ou de recombinaisons.

6. Produit diététique selon l'une des revendications 1 à 5, **caractérisé en ce qu'**il contient comme glucide une seule sorte de sucre.

7. Produit diététique selon l'une des revendications 1 à 6, **caractérisé en ce qu'**il contient du fructose.

8. Produit diététique selon l'une des revendications 1 à 7, **caractérisé en ce qu'**il contient des graisses ayant une grande teneur en acides gras insaturés ou essentiels.

9. Produit diététique selon l'une des revendications 1 à 8, **caractérisé en ce qu'**il contient en outre des vitamines et des sels minéraux.
